# EUROPÄISCHE PATENTSCHRIFT

(11) **EP 3 308 415 B1**
(45) Veröffentlichungstag und Bekanntmachung des Hinweises auf die Patenterteilung: **13.01.2021**
(21) Anmeldenummer: 16728893.5
(22) Anmeldetag: 03.06.2016
(51) Int. Cl.: H01M 2/10, H01M 2/20, H01M 2/30, H01M 10/0525, H01M 10/04

(54) **BATTERIEZELLE MIT EINEM INNERHALB EINES ZWEITEN TERMINALS ANGEORDNETEN ERSTEN TERMINAL**
BATTERY CELL COMPRISING A FIRST TERMINAL ARRANGED INSIDE A SECOND TERMINAL
ÉLÉMENT DE BATTERIE COMPORTANT UNE PREMIÈRE BORNE AGENCÉE À L'INTÉRIEUR D'UNE SECONDE BORNE

(30) Priorität: 11.06.2015 DE 102015210671
(43) Veröffentlichungstag der Anmeldung: 18.04.2018
(73) Patentinhaber: Robert Bosch GmbH, 70442 Stuttgart (DE)
(72) Erfinder: RIEDMANN, Matthias, 70188 Stuttgart (DE); KOHN, Peter, 70178 Stuttgart (DE); HAFENBRAK, Robert, 70469 Stuttgart (DE); GREINER, Daniel Bernd, 72070 Tuebingen (DE); WAGNER, Christian, 70469 Stuttgart (DE)
(86) Internationale Anmeldenummer: PCT/EP2016/062646
(87) Internationale Veröffentlichungsnummer: WO 2016/198332

(56) Entgegenhaltungen:
- EP-A2- 1 791 198
- WO-A1-94/23460
- DE-A1- 10 122 682
- GB-A- 2 248 338
- US-A1- 2001 014 418

## Beschreibung

Die vorliegende Erfindung bezieht sich auf eine Batteriezelle, insbesondere auf eine Lithiumionen-Batteriezelle, mit einem ersten Terminal, welches innerhalb eines zweiten Terminals angeordnet ist, sowie auf ein Batteriemodul, eine Batterie, nach dem Oberbegriff der unabhängigen Ansprüche.

### Stand der Technik

Eine Batteriezelle ist ein elektrochemischer Energiespeicher, der bei seiner Entladung die gespeicherte chemische Energie durch eine elektrochemische Reaktion in elektrische Energie umwandelt. Es zeichnet sich ab, dass in der Zukunft sowohl bei stationären Anwendungen, wie Windkraftanlagen, in Kraftfahrzeugen, die als Hybrid- oder Elektrokraftfahrzeuge ausgelegt sind, wie auch bei Elektronikgeräten neue Batteriesysteme zum Einsatz kommen werden, an die sehr hohen Anforderungen bezüglich Zuverlässigkeit, Sicherheit, Leistungsfähigkeit und Lebensdauer gestellt werden. Aufgrund ihrer großen Energiedichte werden insbesondere Lithium-Ionen-Batterien als Energiespeicher für elektrisch angetriebene Kraftfahrzeuge verwendet.

In der DE 102012215205 A1 ist ein Zellverbinder offenbart, welcher eine Abdeckeinrichtung mit einem Innengewinde aufweist. Das Innengewinde des Zellverbinders ist mit einem Außengewinde einer Batteriezelle verbindbar.

Die DE 2901427 A1 offenbart eine Akkumulatorbatterie mit einem Innengewinde, in welches ein Rohr mit einem Außengewinde eindrehbar ist. Das Gehäuse weist ein weiteres Innengewinde auf, welches koaxial zu dem ersten Innengewinde angeordnet ist, und mit einem Außengewinde eines Werkzeuges zusammenwirkt, um das drehbare Rohr in die Batterie hinein oder aus dieser heraus zu drehen.

In der DE 102012218162 A1 ist eine Vorrichtung zur Verbindung mehrerer Energiespeichermodule miteinander offenbart. Dabei sind jeweils Schrauben zum Verbinden der Module vorgesehen, welche ein Außengewinde aufweisen. Ferner weisen die Schrauben im Schraubenkopf ein Innengewinde auf, welches konzentrisch zu dem Außengewinde angeordnet ist.

Die EP 2675000 A1 offenbart eine Batteriezelle mit zwei Terminals, welche parallel zueinander aus derselben Fläche des Gehäuses der Batteriezelle hervorragen. Die beiden Terminals sind dabei jeweils bolzenartig ausgebildet und umfassen ein Außengewinde, auf welches jeweils eine Mutter aufgeschraubt ist.

Weiterer relevanter Stand der Technik ist in folgenden Dokumenten offenbart, die sich alle auf Terminale der sekundären Batterien mit Schraubgewinde beziehen: EP 1 791 198 A2, GB 2 248 338 A, WO 94/23460 A1, US 2001/014418 A1 und DE 101 22 682 A1.

### Offenbarung der Erfindung

Erfindungsgemäß werden eine Batteriezelle mit einem ersten Terminal und einem zweiten Terminal, wobei das erste Terminal innerhalb des zweiten Terminals angeordnet ist, sowie ein Batteriemodul, eine Batterie und ein Verfahren zur Herstellung des Batteriemoduls, mit den kennzeichnenden Merkmalen der unabhängigen Ansprüche bereitgestellt.

Die erfindungsgemäße Batteriezelle mit einem ersten Terminal, welches elektrisch leitfähig mit einer ersten Elektrode verbunden ist, und einem zweiten Terminal, welches elektrisch leitfähig mit einer zweiten Elektrode verbunden ist, wobei das erste Terminal innerhalb des zweiten Terminals angeordnet ist, und das erste Terminal ein erstes Schraubgewinde und das zweite Terminal ein zweites Schraubgewinde umfasst, dadurch gekennzeichnet, dass die außerhalb der Batteriezelle liegende Enden der Schraubgewinde des ersten Terminals und des zweiten Terminals auf gleicher Höhe ansetzen, gemäß dem unabhängigen Anspruch 1 und bietet den Vorteil, dass die Terminals nur wenig Raum in der Umgebung der Batteriezelle einnehmen. Der Raum, der durch das erste Terminal und durch das zweite Terminal der Batteriezelle eingenommen wird ist deutlich kleiner im Vergleich zu herkömmlichen Batteriezellen mit zwei Terminals, welche nicht innerhalb einander angeordnet sind. Im Vergleich zu Terminals einer Batteriezelle, welche beispielsweise auf zwei sich gegenüberliegenden Seitenflächen der Batteriezelle angeordnet sind, wie es beispielsweise bei Rundzellen üblich ist, steht nun eine dieser Seitenflächen der Batteriezelle für andere Funktionen, wie beispielsweise der Kühlung der Batteriezelle, zur Verfügung. Desweiteren wird bei einem Zusammenbau erfindungsgemäßer Batteriezellen Platz eingespart, da die Terminals nur auf einer Seitenfläche der Batteriezellen hervor stehen und beispielsweise auf der gegenüberliegenden Seitenfläche kein Terminal hervor steht. Desweiteren werden beim Zusammenbau mehrerer erfindungsgemäßer Batteriezellen Arbeitsschritte eingespart, da die Batteriezelle bei deren Montage nicht gedreht werden muss, sondern nur auf einer Seitenfläche kontaktiert wird.

Weitere vorteilhafte Ausführungsformen der vorliegenden Batteriezelle ergeben sich aus den Unteransprüchen.

Gemäß der Erfindung, weisen das erste und das zweite Terminal je ein Schraubgewinde auf. Ein Schraubgewinde bietet den Vorteil, dass eine Schraubverbindung wieder gelöst werden kann. Im Fall eines Defekts einer Batteriezelle kann diese somit ausgetauscht werden, ohne dass das ganze Batteriemodul entsorgt werden muss. Desweiteren vorteilhaft bei einer Schraubverbindung ist, dass diese mehrmals gelöst und wieder neu verbunden werden kann, was beispielsweise bei Schweißverbindungen nicht möglich ist. Auch durch ein mehrmaliges Lösen und wieder neu Verbinden einer Schraubverbindung nimmt die Verbindungsqualität nicht ab. Zudem vorteilhaft ist, dass Schraubgewinde temperaturbeständig sind und keine Gefügeveränderungen beim Verbindungsvorgang des Schraubens auftreten. Desweiteren ist es einfach Schraubverbindungen aus unterschiedlichen Werkstoffen herzustellen. Zudem vorteilhaft bei einer Schraubverbindung ist, dass beispielsweise im Vergleich zu einer Schweißverbindung keine problematischen Partikel erzeugt werden, welche später beispielsweise einen Kurzschluss verursachen können.

In einer vorteilhaften Ausführungsform ist das Schraubgewinde des ersten Terminals ein Innengewinde und das Schraubgewinde des zweiten Terminals ein Außengewinde. Auf diese Weise ist der Raum zwischen dem ersten Terminal und dem zweiten Terminal nicht von einem Gewinde begrenzt, sodass beispielsweise ein Isolator in diesen einfach eingebracht werden kann, ohne dass dieser durch das Gewinde beschädigt werden kann. In einer alternativen Ausführungsform ist das Schraubgewinde des ersten Terminals ein Außengewinde und das Schraubgewinde des zweiten Terminals ein Innengewinde. Vorteilhaft hierbei ist, dass der Raum innerhalb des ersten Terminals nicht von einem Gewinde begrenzt ist, sodass dort beispielsweise in den Raum innerhalb des ersten Terminals ein Entgasungsventil eingebracht werden kann, ohne dass die Gefahr einer Beschädigung des Entgasungsventils besteht.

In einer weiteren vorteilhaften Ausführungsform stimmen die Drehrichtung und die Steigung des Schraubgewindes des ersten Terminals und des Schraubgewindes des zweiten Terminals überein. Dadurch ist es möglich das erste Terminal und das zweite Terminal gleichzeitig zu kontaktieren, beispielsweise indem beide Terminals gleichzeitig in einen Moduldeckel geschraubt werden, sodass ein Abgreifen des Stromes erfolgen kann. Die elektrische Verbindung der Terminals der Batteriezellen ist so auf einfache Weise realisierbar. Durch ein gleichzeitiges Einschrauben des ersten und des zweiten Terminals werden zudem Zeit und Arbeitsschritte eingespart.

Gemäß der Erfindung, stimmt der Gewindeansatzpunkt des Schraubgewindes des ersten Terminals und des Schraubgewindes des zweiten Terminals überein. Mit dem Ausdruck Gewindeansatzpunkt ist hier gemeint, dass die außerhalb der Batteriezelle liegenden Enden der Schraubgewinde des ersten und zweiten Terminals auf gleicher Höhe ansetzen und nicht versetzt zueinander. Dadurch wird gewährleistet, dass die Verschraubung der beiden Terminals, beispielsweise mit einem Moduldeckel, gleichartig erfolgt, sodass eine gute und feste Verbindung resultiert. Desweiteren ist es aus gleichen Gründen vorteilhaft, wenn die Gewindelänge des Schraubgewindes des ersten Terminals und des Schraubgewindes des zweiten Terminals übereinstimmt. Wird ein Moduldeckel mit dem ersten und dem zweiten Terminal verschraubt, so haben beide Schraubgewinde den gleichen Gewindeanschlag.

In einer besonders bevorzugten Ausführungsform umfasst das erste Terminal der Batteriezelle Kupfer und das zweite Terminal Aluminium. Da das erste Terminal innerhalb des zweiten Terminals angeordnet ist, wird weniger Kupfer benötigt als Aluminium wodurch sich Vorteile bezüglich der Kostenseite ergeben, da der Werkstoff Kupfer teurer ist als der Werkstoff Aluminium. Dabei bildet das zweite Terminal beispielsweise das positive Terminal. Vorteilhaft hierbei ist, dass das Gehäuse der Batteriezelle beispielsweise auf einfache Weise elektrisch leitend mit dem außen liegenden zweiten Terminal verbunden werden kann, sodass auf dem Gehäuse beispielsweise ein positives Potenzial liegt, was diesem eine Resistenz gegen Korrosion verleiht. Alternativ kann auch das innen liegende erste Terminal elektrisch leitend mit dem Gehäuse der Batteriezelle verbunden werden, sodass beispielsweise ein negatives Potenzial auf dem Gehäuse der Batteriezellen liegt. In einer alternativen Ausführungsform sind sowohl das erste Terminal als auch das zweite Terminal mittels eines Isolierungsmaterials elektrisch von dem Gehäuse der Batteriezelle isoliert, sodass das Gehäuse der Batteriezellen potenzialfrei ist.

In einer alternativen Ausführungsform umfasst das erste Terminal Aluminium und das zweite Terminal umfasst Kupfer.

Aluminium bietet den Vorteil, dass es leicht und kostengünstig ist und zudem in großen Mengen verfügbar. Kupfer hingegen ist vorteilhaft bezüglich seiner Korrosionsbeständigkeit, was unter anderem eine hohe Lebensdauer mit sich bringt. Zudem ist Kupfer gut zu verarbeiten und kann auch bei niedrigen Temperaturen optimal verformt werden.

In einer weiteren besonders bevorzugten Ausführungsform umfassen beide Terminals Aluminium, wobei sich die bereits genannten Vorteile ergeben. Hierbei kann beispielsweise zumindest ein Terminal aus Aluminium eine metallische Beschichtung aufweisen.

In einer bevorzugten Ausführungsform sind das erste Terminal und das zweite Terminal, zumindest im Bereich zwischen deren Schraubgewinden, mittels eines Luftspalts und/oder mittels eines Isolators voneinander elektrisch isoliert. Dadurch ist die Sicherheit der Batteriezelle deutlich erhöht, da durch den Luftspalt, und in einer bevorzugten Ausführung durch den Isolator, die Gefahr eines Kurzschlusses der Batteriezelle unterbunden wird.

Vorteilhaft umfasst der Isolator einen Kunststoff, insbesondere ein Polyolefin, insbesondere ein Polyethylen oder ein Polypropylen. Durch einen Kunststoff können zuverlässig eventuell auftretende mechanische Belastungen durch die Schraubgewinde des ersten und des zweiten Terminals aufgenommen werden. Polyolefine sind gleichzeitig robust und flexibel und weisen eine hohe mechanische und chemische Stabilität auf. Von diesen weist beispielsweise Polyethylen eine hohe Zähigkeit, eine geringe Wasseraufnahme und Wasserdampfdurchlässigkeit, sowie eine hohe Beständigkeit gegen Chemikalien auf und ist zudem gut zu verarbeiten und kostengünstig. Polypropylen weist eine geringe Wasseraufnahme auf, ist chemisch beständig, elektrisch isolierend sowie gut zu verarbeiten und kostengünstig.

In einer besonders bevorzugten Ausführungsform ist innerhalb des ersten Terminals und/oder des zweiten Terminals ein Entgasungsventil angeordnet. Dadurch lässt sich weiterer Platz auf den Außenflächen der Batteriezelle einsparen, der dann für andere Komponenten, beispielsweise für eine Kühlungseinrichtung, zur Verfügung steht. Das Entgasungsventil kann auch zwischen dem ersten Terminal und dem zweiten Terminal angeordnet sein.

Desweiteren ist ein Batteriemodul mit zumindest zwei erfindungsgemäßen Batteriezellen sowie ein Batteriemoduldeckel, welcher pro Batteriezelle zumindest zwei Moduldeckel-Schraubgewinde zum Einschrauben der Batteriezelle umfasst, vorgesehen. Es ist besonders vorteilhaft, wenn der Batteriemoduldeckel mit einem Kunststoff ummantelte Leiterbahnen umfasst. Die Leiterbahnen sind durch den Kunststoff voneinander isoliert, sodass eine zuverlässige und sichere elektrische Verbindung zwischen den Batteriezellen über den Moduldeckel gewährleistet ist. Der Vorteil des Einsatzes von Kunststoff zur Isolierung der Leiterbahnen voneinander ist, dass Kunststoff ein geringes Gewicht aufweist, beispielsweise im Vergleich zu Metallen. Weiterhin vorteilhaft ist, dass Bauteile aus Kunststoff sehr einfach und kostengünstig hergestellt werden können und einfach wiederverwertet werden können. In den Moduldeckel ist desweiteren beispielsweise ein Entgasungskanal und/oder eine Elektronik zur Zellüberwachung integriert.

In einer besonders bevorzugten Ausführungsform sind die Batteriezellen als Batterie-Rundzellen ausgeführt. Vorteilhaft hierbei ist, dass die Batterie-Rundzellen bei der Montage im Batteriemodul dicht nebeneinander angeordnet werden können, und dennoch einzelne Batteriezellen individuell über die Schraubverbindung gelöst und neu verbunden werden können, beispielsweise im Falle eines Defekts einer Batteriezelle. Es muss dann nicht das ganze Modul ausgetauscht werden sondern lediglich die defekte Batteriezelle, was erhebliche Material- und Arbeitskosten einspart. Desweiteren sind die Batteriezellen beispielsweise insbesondere quer zu einer Längsachse der Batteriezellen miteinander fixiert, sodass eine stabile Anordnung der Batteriezellen im Batteriemodul gewährleistet ist. Die Fixierung geschieht beispielsweise mittels einer Platte, welche Ausnehmungen in Zellgröße aufweist, durch welche die Batteriezellen quer zu deren Längsachse eingeschoben und so miteinander fixiert werden. Beim Arbeitsschritt des Einschraubens werden so beispielsweise gleichzeitig die elektrische Kontaktierung sowie auch die mechanische Fixierung hergestellt.

Vorteilhaft ist ein Verfahren zur Herstellung eines Batteriemoduls wobei das erste Terminal und das zweite Terminal jeder Batteriezelle synchron zueinander in je ein Moduldeckel-Schraubgewinde des Batteriemoduldeckels eingeschraubt werden. Durch das Einschrauben der Batteriezellen in den Batteriemoduldeckel werden das erste Terminal und das zweite Terminal der Batteriezelle gleichzeitig elektrisch kontaktiert, sodass Zeit und Arbeitskosten eingespart werden. Die Montage der Batteriezellen gestaltet sich zudem sehr einfach.

Die erfindungsgemäße Batterie wird vorteilhaft in einem Elektrofahrzeug, in einem Hybridfahrzeug oder in einem Plug-In-Hybridfahrzeug verwendet.

### Kurze Beschreibung der Zeichnung

Ausführungsformen der vorliegenden Erfindung sind in der Zeichnung dargestellt und in der nachfolgenden Figurenbeschreibung näher erläutert. Es zeigt:
- Fig. 1:: die schematische Darstellung einer Aufsicht auf eine erfindungsgemäße Batteriezelle mit einem ersten Terminal, welches innerhalb eines zweiten Terminals angeordnet ist,
- Fig. 2:: die schematische Darstellung eines Längsschnitts durch die Längsachse der erfindungsgemäßen Batteriezelle gemäß Figur 1,
- Fig. 3:: die schematische Darstellung eines Ausschnitts eines Batteriemoduldeckels und dreier erfindungsgemäßer Batteriezellen gemäß der Figuren 1 und 2, und
- Fig. 4:: die schematische Darstellung eines Ausschnitts eines erfindungsgemäßen Batteriemoduls.

### Ausführungsformen der Erfindung

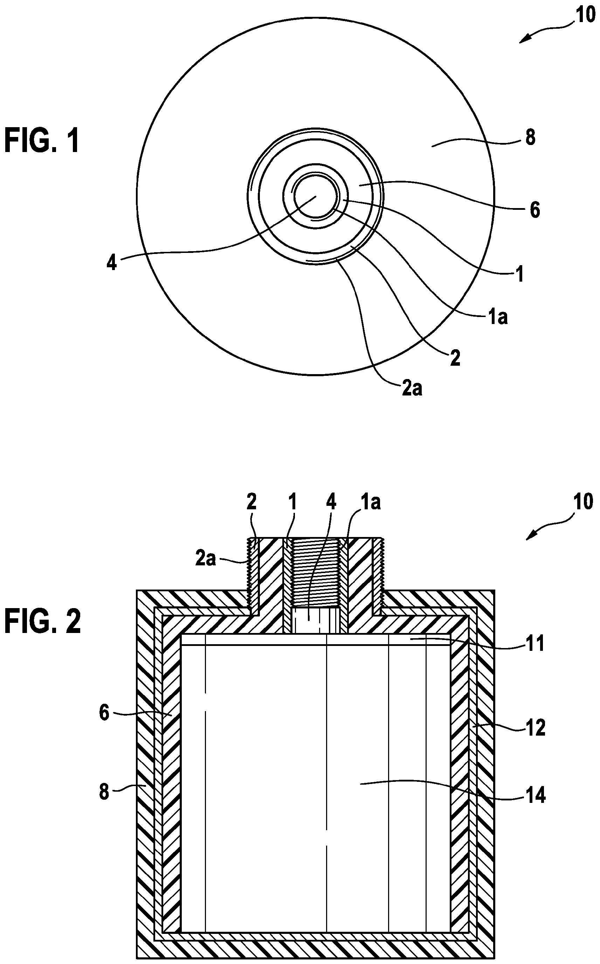

Figur 1 zeigt eine Aufsicht auf eine erfindungsgemäße Batteriezelle 10 mit einem Gehäuse 8. Aus dem Gehäuse 8 ragen ein erstes Terminal 1 und ein zweites Terminal 2 hervor, wobei das erste Terminal 1 innerhalb des zweiten Terminals 2 angeordnet ist. Das erste Terminal 1 umfasst beispielsweise Aluminium und das zweite Terminal 2 umfasst beispielsweise Kupfer. Alternativ umfasst das erste Terminal 1 Kupfer und das zweite Terminal 2 umfasst Aluminium. Das erste Terminal 1 ist von dem zweiten Terminal 2 durch einen Isolator 6 elektrisch isoliert. Der Isolator 6 umfasst beispielsweise einen Kunststoff, insbesondere ein Polyolefin, insbesondere ein Polyethylen oder ein Polypropylen. Alternativ kann anstelle des Isolators 6 ein Luftspalt vorhanden sein. Innerhalb des ersten Terminals 1 ist ein Entgasungsventil 4 angeordnet.

In Figur 2 ist die Batteriezelle 10 gemäß Figur 1 in einer Schnittdarstellung dargestellt. Die Batteriezelle 10 umfasst einen Elektrodenverbund 14 mit zumindest einer nicht dargestellten ersten Elektrode und einer nicht dargestellten zweiten Elektrode. Desweiteren umfasst der Elektrodenverbund 14 beispielsweise einen nicht dargestellten Separator. Die erste Elektrode des Elektrodenverbunds 14 ist mit einem ersten Stromableiter 11 verbunden. Der erste Stromableiter 11 ist mit dem ersten Terminal 1 elektrisch leitend verbunden. Das erste Terminal 1 umfasst ein erstes Schraubgewinde 1a, welches als Innengewinde ausgeführt ist. Alternativ kann das erste Schraubgewinde 1a des ersten Terminals 1 auch ein Außengewinde sein.

Die zweite Elektrode des Elektrodenverbunds 14 ist mit einem zweiten Stromableiter 12 verbunden. Der zweite Stromableiter 12 ist mit dem zweiten Terminal 2 elektrisch leitend verbunden. Das zweite Terminal 2 umfasst ein zweites Schraubgewinde 2a, welches hier als Außengewinde ausgeführt ist. Alternativ kann das zweite Schraubgewinde 2a des zweiten Terminals 2 auch ein Innengewinde sein. Die Drehrichtung des ersten Schraubgewindes 1a des ersten Terminals 1 und die Drehrichtung des zweiten Schraubgewindes 2a des zweiten Terminals 2 stimmen beispielsweise überein, sowie beispielsweise auch der Gewindeansatzpunkt des ersten Schraubgewindes 1a und des zweiten Schraubgewindes des 2a übereinstimmt. Desweiteren stimmt die Gewindelänge des ersten Schraubgewindes 1a des ersten Terminals 1 mit der Gewindelänge des zweiten Schraubgewindes 2a des zweiten Terminals 2 beispielsweise überein. Zwischen dem ersten Terminal 1 und dem zweiten Terminal 2 ist beispielsweise ein Isolator 6 angeordnet. Dieser kann sich lediglich zwischen dem ersten Terminal 1 und dem zweiten Terminal 2 befinden oder alternativ auch einen weiterführenden Bereich isolieren, welcher sich beispielsweise zwischen dem Elektrodenverbund 14 und einem der Stromableiter 11, 12 befindet und/oder welcher sich zwischen dem ersten Stromableiter 11 und dem zweiten Stromableiter 12 befindet. Der erste Stromableiter 11 und der zweite Stromableiter 12 sind in Figur 2 einteilig dargestellt. Alternativ können diese auch mehrteilig ausgeführt sein.

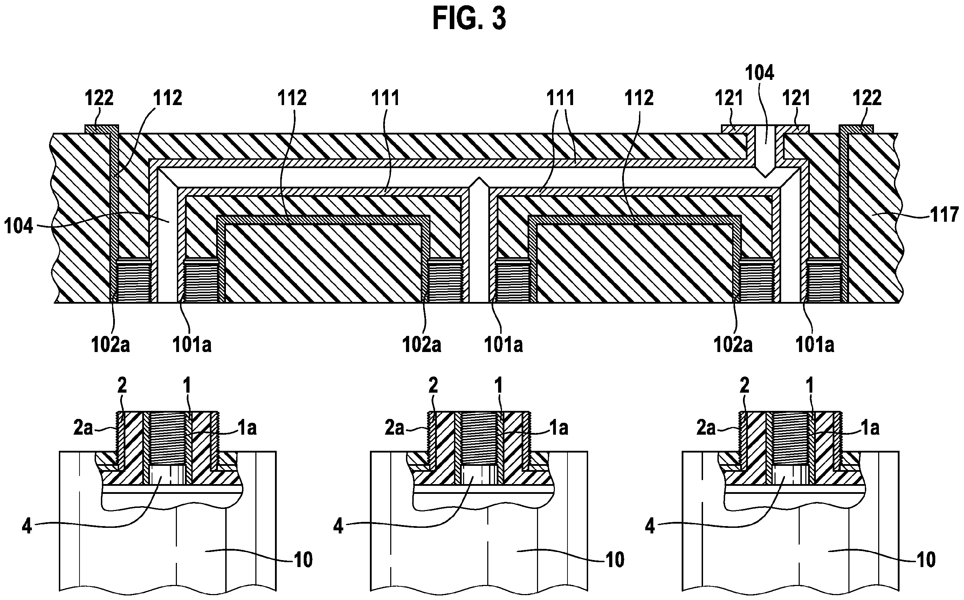

In Figur 3 sind drei Batteriezellen 10 gemäß der Figuren 1 und 2 dargestellt sowie ein Ausschnitt aus einem Batteriemoduldeckel 117. Der Batteriemoduldeckel 117 umfasst beispielsweise einen Kunststoff, ein Metall, eine Metalllegierung oder einen Verbund aus Kunststoff und Metall oder einer Metalllegierung. Der Batteriemoduldeckel 117 umfasst ein erstes Moduldeckel-Schraubgewinde 101a, in welches das erste Schraubgewinde 1a des ersten Terminals 1 einschraubbar ist. Der Batteriemoduldeckel 117 umfasst ein zweites Moduldeckel-Schraubgewinde 102a, in welches das zweite Schraubgewinde 2a des zweiten Terminals 2 einschraubbar ist. Desweiteren umfasst der Batteriemoduldeckel 117 erste Leiterbahnen 111 zum Abgreifen eines Stromes des ersten Terminals 1 der Batteriezellen 10 sowie zweite Leiterbahnen 112 zum Abgreifen eines Stromes des zweiten Terminals 2 der Batteriezellen 10. Die ersten Leiterbahnen 111 und die zweiten Leiterbahnen 112 sind beispielsweise mit einem Kunststoff ummantelt. Die ersten Leiterbahnen 111 münden in einen ersten Modulkontaktbereich 121 und die zweiten Leiterbahnen 112 münden in zweite Modulkontaktbereiche 122. In den Modulkontaktbereichen 121, 122 kann der Batteriemoduldeckel 117 elektrisch kontaktiert werden. In Figur 3 stehen die Modulkontaktbereiche 121, 122 aus dem Batteriemoduldeckel 117 hervor. Alternativ können die Modulkontaktbereiche 121, 122 auf Höhe des Batteriemoduldeckels 117 mit diesem ebenflächig abschließen. In Figur 3 ist der erste Modulkontaktbereich 121 um einen Entgasungskanal 104 herum angeordnet und der zweite Modulkontaktbereich 122 ist flächig ohne Aussparung ausgeführt. Alternativ kann der erste Modulkontaktbereich 121 ebenfalls durchgehend ausgeführt sein. Die Führung der ersten Leiterbahnen 111 und der zweiten Leiterbahnen 112 ist desweiteren in Figur 3 nur beispielhaft dargestellt, sie kann von der Darstellung abweichen. In Figur 3 sind zwei zweite Modulkontaktbereiche 122 dargestellt. Alternativ ist entsprechend des ersten Modulkontaktbereichs 121 nur ein zweiter Modulkontaktbereich 122 vorhanden, in den alle zweiten Leiterbahnen 112 münden. Der Batteriemoduldeckel 117 umfasst somit zwei Modulkontaktbereiche 121, 122. Weiterhin alternativ umfasst der Batteriemoduldeckel 117 mehrere erste Modulkontaktbereiche 121 und/oder mehrere zweite Modulkontaktbereiche 122.

Der Entgasungskanal 104 mündet auf einer Außenseite des Batteriemoduldeckels 117. Sind das erste Terminal 1 und das zweite Terminal 2 einer Batteriezelle 10 in den Batteriemoduldeckel 117 eingeschraubt, so grenzt das Entgasungsventil 4 der Batteriezelle 10 an den Entgasungskanal 104, sodass im Gefahrenfall Gas aus der Batteriezelle 10 über das Entgasungsventil 4 in den in den Entgasungskanal 104 strömen kann. Angrenzend an den Entgasungskanal 104 verlaufen beispielsweise die ersten Leiterbahnen 111. Alternativ wird der Entgasungskanal 104 beispielsweise durch die ersten Leiterbahnen 111 gebildet.

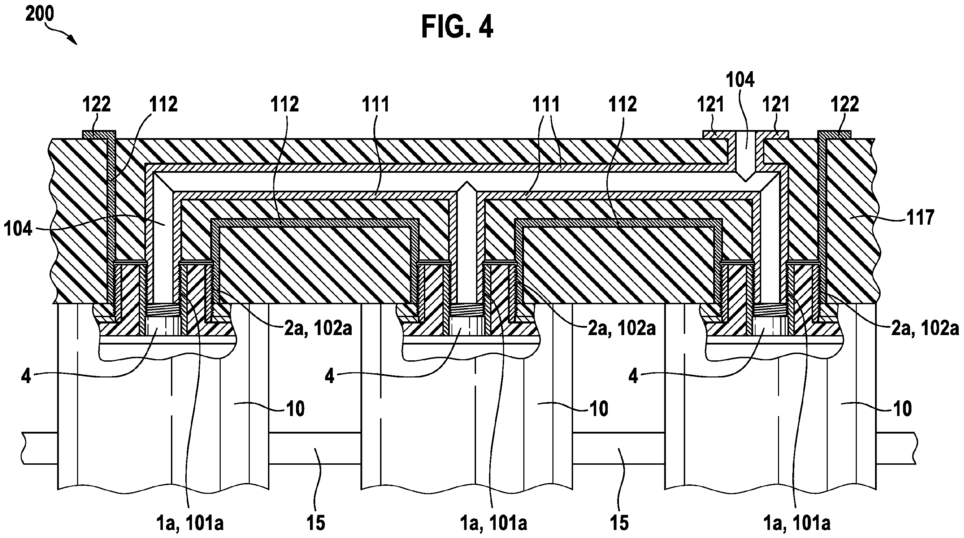

In Figur 4 ist ein Ausschnitt eines erfindungsgemäßen Batteriemoduls 200 dargestellt mit einem Batteriemoduldeckel 117 gemäß Figur 3 und Batteriezellen 10 gemäß der Figuren 1, 2 und 3. die Batteriezellen 10 befinden sich in einem in den Batteriemoduldeckel 117 eingeschraubten Zustand. Der Übersichtlichkeit halber sind in Figur 4 nicht alle Komponenten der Batteriezellen 10 und des Batteriemoduldeckels 117 dargestellt. Die Batteriezellen 10 sind durch eine Fixierung 15 welche quer zu der Längsachse der Batteriezellen 10 angeordnet ist miteinander fixiert. Die Fixierung 15 ist beispielsweise durch eine Platte mit beispielsweise kreisförmigen Ausnehmungen in Zellgröße gebildet, in welche die Batteriezellen 10 quer zu deren Längsachse eingeschoben werden, sodass sie fest miteinander verbunden sind. Der Batteriemoduldeckel 117 kann desweiteren eine in den Figuren nicht dargestellte Elektronik umfassen, welche zur Überwachung der Zelle dient.

## Patentansprüche

1. Batteriezelle (10), insbesondere Lithiumionen-Batteriezelle, mit einem ersten Terminal (1) welches elektrisch leitfähig mit einer ersten Elektrode verbunden ist und einem zweiten Terminal (2) welches elektrisch leitfähig mit einer zweiten Elektrode verbunden ist, wobei das erste Terminal (1) innerhalb des zweiten Terminals (2) angeordnet ist und das erste Terminal (1) ein erstes Schraubgewinde (1a) und das zweite Terminal (2) ein zweites Schraubgewinde (2a) umfasst,
**dadurch gekennzeichnet, dass**
die außerhalb der Batteriezelle (10) liegenden Enden der Schraubgewinde (1a, 2a) des ersten Terminals (1) und zweiten Terminals (2) auf gleicher Höhe ansetzen.

2. Batteriezelle (10) nach Anspruch 1, **dadurch gekennzeichnet, dass** das Schraubgewinde (1a) des ersten Terminals (1) ein Innengewinde und das Schraubgewinde (2a) des zweiten Terminals (2) ein Außengewinde ist.

3. Batteriezelle (10) nach einem der Ansprüche 1 oder 2, **dadurch gekennzeichnet, dass** die Drehrichtung und die Steigung des Schraubgewindes (1a) des ersten Terminals (1) und des Schraubgewindes (2a) des zweiten Terminals (2) übereinstimmen.

4. Batteriezelle (10) nach einem der Ansprüche 1-3, **dadurch gekennzeichnet, dass** die Gewindelänge des Schraubgewindes (1a) des ersten Terminals (1) und des Schraubgewindes (2a) des zweiten Terminals (2) übereinstimmt.

5. Batteriezelle (10) nach einem der vorhergehenden Ansprüche, **dadurch gekennzeichnet, dass** das erste Terminal (1) Aluminium umfasst und das zweite Terminal (2) Kupfer umfasst oder dass das erste Terminal (1) Kupfer umfasst und das zweite Terminal (2) Aluminium umfasst oder dass sowohl das erste Terminal (1) als auch das zweite Terminal (2) Aluminium umfassen.

6. Batteriezelle (10) nach einem der Ansprüche 1-5, **dadurch gekennzeichnet, dass** das erste Terminal (1) und das zweite Terminal (2), zumindest im Bereich zwischen deren Schraubgewinden (1a, 2a), mittels eines Luftspalts und/oder mittels eines Isolators (6) voneinander elektrisch isoliert sind.

7. Batteriezelle (10) nach Anspruch 6, **dadurch gekennzeichnet, dass** der Isolator (6) einen Kunststoff, insbesondere ein Polyolefin, insbesondere ein Polyethylen oder ein Polypropylen umfasst.

8. Batteriezelle (10) nach einem der vorhergehenden Ansprüche, **dadurch gekennzeichnet, dass** innerhalb des ersten Terminals (1) und/oder des zweiten Terminals (2) ein Entgasungsventil (4) angeordnet ist.

9. Batteriemodul (200) mit zumindest zwei Batteriezellen (10) nach einem der Ansprüche 1-8 und einem Batteriemoduldeckel (117), welcher pro Batteriezelle (10) zumindest zwei Moduldeckel-Schraubgewinde (101a, 102a) zum Einschrauben der Batteriezellen (10) umfasst.

10. Batteriemodul (200) nach Anspruch 9, **dadurch gekennzeichnet, dass** der Batteriemoduldeckel (117) mit einem Kunststoff ummantelte Leiterbahnen (111, 112) umfasst.

11. Batteriemodul (200) nach einem der Ansprüche 9 oder 10, **dadurch gekennzeichnet, dass** die Batteriezellen (10) insbesondere Batterie-Rundzellen sind und, dass die Batteriezellen (10) durch eine Fixierung (15), welche insbesondere quer zu einer Längsachse der Batteriezellen (10) angeordnet ist, miteinander fixiert sind.

12. Batteriemodul (200) nach einem der Ansprüche 9-11, **dadurch gekennzeichnet, dass** der Batteriemoduldeckel (117) einen Entgasungskanal (104) und/oder eine Elektronik zur Zellüberwachung umfasst.

13. Batterie, umfassend eine Batteriezelle (10) nach einem der Ansprüche 1-8 und/oder ein Batteriemodul (200) nach einem der Ansprüche 9-12.

## Claims

1. Battery cell (10), in particular lithium-ion battery cell, having a first terminal (1) which is electrically conductively connected to a first electrode and a second terminal (2) which is electrically conductively connected to a second electrode, wherein the first terminal (1) is arranged within the second terminal (2) and the first terminal (1) comprises a first screw thread (1a) and the second terminal (2) comprises a second screw thread (2a),
**characterized in that**
the ends of the screw thread (1a, 2a) of the first terminal (1) and second terminal (2), which ends are situated outside the battery cell (10), start at the same height.

2. Battery cell (10) according to Claim 1, **characterized in that** the screw thread (1a) of the first terminal (1) is an internal thread and the screw thread (2a) of the second terminal (2) is an external thread.

3. Battery cell (10) according to either of Claims 1 and 2, **characterized in that** the rotation direction and the pitch of the screw thread (1a) of the first terminal (1) and of the screw thread (2a) of the second terminal (2) correspond.

4. Battery cell (10) according to one of Claims 1-3, **characterized in that** the thread length of the screw thread (1a) of the first terminal (1) and of the screw thread (2a) of the second terminal (2) correspond.

5. Battery cell (10) according to one of the preceding claims, **characterized in that** the first terminal (1) comprises aluminium and the second terminal (2) comprises copper, or **in that** the first terminal (1) comprises copper and the second terminal (2) comprises aluminium, or **in that** both the first terminal (1) and the second terminal (2) comprise aluminium.

6. Battery cell (10) according to one of Claims 1-5, **characterized in that** the first terminal (1) and the second terminal (2) are electrically insulated from one another, at least in the region between the screw threads (1a, 2a) of said terminals, by means of an air gap and/or by means of an insulator (6).

7. Battery cell (10) according to Claim 6, **characterized in that** the insulator (6) comprises a plastic, in particular a polyolefin, in particular a polyethylene or a polypropylene.

8. Battery cell (10) according to one of the preceding claims, **characterized in that** a degassing valve (4) is arranged within the first terminal (1) and/or the second terminal (2).

9. Battery module (200) having at least two battery cells (10) according to one of Claims 1-8 and a battery module cover (117) which comprises, for each battery cell (10), at least two module cover screw threads (101a, 102a) for screwing in the battery cells (10).

10. Battery module (200) according to Claim 9, **characterized in that** the battery module cover (117) comprises conductor tracks (111, 112) which are sheathed using a plastic.

11. Battery module (200) according to either of Claims 9 and 10, **characterized in that** the battery cells (10) are, in particular, round battery cells, and **in that** the battery cells (10) are fixed to one another by a fixing arrangement (15) which is arranged, in particular, transverse to a longitudinal axis of the battery cells (10).

12. Battery module (200) according to one of Claims 9-11, **characterized in that** the battery module cover (117) comprises a degassing channel (104) and/or an electronics system for cell monitoring.

13. Battery comprising a battery cell (10) according to one of Claims 1-8 and/or a battery module (200) according to one of Claims 9-12.

## Revendications

1. Elément de batterie (10), en particulier élément de batterie aux ions lithium, comprenant une première borne (1) qui est reliée de manière électroconductrice à une première électrode, et une deuxième borne (2) qui est reliée de manière électroconductrice à une deuxième électrode, la première borne (1) étant disposée à l'intérieur de la deuxième borne (2) et la première borne (1) comprenant un premier filet de vis (1a) et la deuxième borne (2) comprenant un deuxième filet de vis (2a) ,
**caractérisé en ce que** les extrémités du filet de vis (1a, 2a) de la première borne (1) et de la deuxième borne (2), situées à l'extérieur de l'élément de batterie (10), attaquent au même niveau.

2. Elément de batterie (10) selon la revendication 1, **caractérisé en ce que** le filet de vis (1a) de la première borne (1) est un taraudage et le filet de vis (2a) de la deuxième borne (2) est un filetage.

3. Elément de batterie (10) selon l'une quelconque des revendications 1 et 2, **caractérisé en ce que** le sens de rotation et le pas du filet de vis (1a) de la première borne (1) et du filet de vis (2a) de la deuxième borne (2) coïncident.

4. Elément de batterie (10) selon l'une quelconque des revendications 1 à 3, **caractérisé en ce que** la longueur de filet du filet de vis (1a) de la première borne (1) et du filet de vis (2a) de la deuxième borne (2) coïncident.

5. Elément de batterie (10) selon l'une quelconque des revendications précédentes, **caractérisé en ce que** la première borne (1) comprend de l'aluminium et la deuxième borne (2) comprend du cuivre, ou **en ce que** la première borne (1) comprend du cuivre et la deuxième borne (2) comprend de l'aluminium, ou **en ce qu'**à la fois la première borne (1) et la deuxième borne (2) comprennent de l'aluminium.

6. Elément de batterie (10) selon l'une quelconque des revendications 1 à 5, **caractérisé en ce que** la première borne (1) et la deuxième borne (2), au moins dans la zone entre leurs filets de vis (1a, 2a), sont électriquement isolées l'une par rapport à l'autre au moyen d'un entrefer et/ou au moyen d'un isolateur (6).

7. Elément de batterie (10) selon la revendication 6, **caractérisé en ce que** l'isolateur (6) comprend une matière plastique, en particulier une polyoléfine, en particulier un polyéthylène ou un polypropylène.

8. Elément de batterie (10) selon l'une quelconque des revendications précédentes, **caractérisé en ce qu'**une valve de dégazage (4) est disposée à l'intérieur de la première borne (1) et/ou de la deuxième borne (2) .

9. Module de batterie (200), comprenant au moins deux éléments de batterie (10) selon l'une quelconque des revendications 1 à 8 et un couvercle de module de batterie (117) qui comprend pour chaque élément de batterie (10) au moins deux filets de vis de couvercle de module (101a, 102a) pour visser les éléments de batterie (10).

10. Module de batterie (200) selon la revendication 9, **caractérisé en ce que** le couvercle de module de batterie (117) comprend des pistes conductives (111, 112) gainées de matière plastique.

11. Module de batterie (200) selon l'une quelconque des revendications 9 et 10, **caractérisé en ce que** les éléments de batterie (10) sont en particulier des piles cylindriques, et **en ce que** les éléments de batterie (10) sont fixés les uns aux autres par une fixation (15) qui est disposée en particulier transversalement à un axe longitudinal des éléments de batterie (10).

12. Module de batterie (200) selon l'une quelconque des revendications 9 à 11, **caractérisé en ce que** le couvercle de module de batterie (117) comprend un canal de dégazage (104) et/ou une électronique pour surveiller les éléments.

13. Batterie, comprenant un élément de batterie (10) selon l'une quelconque des revendications 1 à 8 et/ou un module de batterie (200) selon l'une quelconque des revendications 9 à 12.
